# DEMANDE DE BREVET EUROPEEN

(11) **EP 0 943 946 A1**
(43) Date de publication de la demande: **22.09.1999**
(21) Numéro de dépôt: 99400546.0
(22) Date de dépôt: 08.03.1999
(51) Int. Cl.: G02B 6/44

(54) **Procédé de fabrication d'un multiruban de fibres optiques séparable en au moins deux rubans de fibres optiques**

(30) Priorité: 19.03.1998 FR 9803353
(71) Demandeur: ALCATEL, 75008 Paris (FR)
(72) Inventeur: Yang, Michael, Conover,NC 28613 (US)
(74) Mandataire: Doressamy, Clarisse

(57) **Abrégé**

Procédé de fabrication d'un multiruban (10) de fibres optiques (1), séparable en au moins deux rubans, comprenant :
une première étape de réalisation d'un multiruban (10) comportant lesdites fibres côte à côte, parallèles, sensiblement dans un même plan définissant les faces (19a, 19b) dudit multiruban, noyées à l'intérieur d'une matrice commune (15, 16), par enduction d'au moins une couche de revêtement sur les fibres réalisant le multiruban puis par thermodurcissement de ladite couche,
et une seconde étape de réalisation d'au moins une ligne de rupture préférentielle entre deux fibres optiques voisines, comprenant au moins une entaille (11a, 11b) dans la couche de revêtement, parallèlement à l'axe X des fibres optiques du multiruban, dans un plan (P₀) perpendiculaire aux faces du ruban, sensiblement médian par rapport auxdites fibres optiques voisines, par un dispositif d'entaillage comprenant un moyen d'entaillage (17a, 17b) d'au moins une des faces du multiruban.

## Description

La présente invention concerne un procédé de fabrication d'un multiruban de fibres optiques séparable en au moins deux rubans de fibres optiques, ainsi que les multirubans obtenus selon le procédé.

Ainsi qu'il est connu, une fibre optique est destinée à transmettre des ondes lumineuses et comprend une partie optique ou fibre optique nue, constituée d'un coeur optique entouré d'une gaine optique, généralement revêtue d'au moins une couche de protection et éventuellement d'une couche d'identification le plus souvent colorée. De façon avantageuse, de telles fibres optiques peuvent être réunies au sein d'un ruban de fibres optiques, auquel cas les fibres optiques sont disposées côte à côte, parallèles les unes aux autres et sensiblement dans un même plan, et noyées à l'intérieur d'une matrice commune de protection. Une tel ruban de fibres optiques est généralement utilisé pour la fabrication d'un câble optique haute densité, par exemple un câble de télécommunication, pour transmettre l'information d'un fournisseur d'information à un utilisateur situé à distance éloignée du fournisseur. Au niveau des différents utilisateurs, les fibres optiques sont réparties en différents paquets de fibres optiques, ce qui requiert de les séparer sans dommage, c'est-à-dire sans détérioration des caractéristiques de transmission des fibres optiques. C'est pourquoi l'utilisation d'un multiruban de fibres optiques, à deux faces sensiblement plates, disposées côte à côte, parallèles les unes aux autres et sensiblement dans un même plan, qui définit alors les deux faces sensiblement plates dudit multiruban, et noyées à l'intérieur d'une matrice commune de protection, ledit multiruban étant séparable en au moins deux rubans de fibres optiques, est intéressante.

Il serait inutilement compliqué et coûteux, lors de l'utilisation d'un multiruban de fibres optiques, de devoir disposer sur le terrain d'un matériel supplémentaire de séparation du multiruban en au moins deux rubans de fibres optiques. C'est pourquoi il a été proposé des multirubans pour lesquels des entailles étaient réalisées selon au moins une ligne longitudinale de rupture préférentielle, lors de l'enduction d'au moins une couche de revêtement en résine formant matrice, par moulage de la résine puis thermodurcissement. Ainsi, le brevet US-A-5.442.722 mentionne un premier art antérieur d'entaillage par moulage direct de la matrice entaillée (voir figure 1 dudit brevet illustrant l'art antérieur), qui ne permet pas d'obtenir des rubans de dimensions suffisamment précises. Le brevet US-A-5.442.722 est, lui, orienté sur une technologie d'ouverture du ruban par lien(s) inséré(s) dans la matrice. Le thermodurcissement est un durcissement qui est réalisé par irradiation, par exemple par réticulation d'une résine sous l'effet d'un rayonnement ultraviolet (ou U.V.), telle que par exemple une résine à base d'uréthane-acrylate. Le rayonnement ultraviolet sert à apporter l'énergie nécessaire à la réaction de réticulation. De même la demande de brevet EP-A1-0.647.866 décrit une technologie basée sur l'ouverture du ruban par au moins un lien inséré dans la matrice, l'ouverture pouvant être facilitée par la réalisation d'entailles dans le ruban.

Mais de telles réalisations se sont révélées décevantes. En effet, d'une part le positionnement du dispositif de moulage, sur le multiruban de fibres optiques, est difficile à obtenir avec une précision suffisante pour ne pas endommager les fibres optiques. D'autre part, l'entaille réalisée par moulage dans la résine encore fluide a tendance à se remplir de résine peu après le moulage, principalement à haute vitesse de défilement des fibres optiques dans le dispositif de fabrication du multiruban. Enfin la technologie du lien inséré est compliquée à mettre en oeuvre, car il faut positionner le lien très précisément dans la matrice de résine, et surtout cette technologie ne permet pas de séparer un ruban autrement qu'aux extrémités, car il n'est pas possible d'avoir accès au lien en dehors des extrémités du ruban.

D'autre part, il a été envisagé d'entailler le revêtement comme le second art antérieur cité dans le brevet US-A-5.442.722. Ainsi la demande de brevet japonais JP-A-1-138 516 propose un procédé de fabrication d'un multiruban de fibres optiques, à deux faces sensiblement plates, séparable en au moins deux rubans de fibres optiques, qui comporte la fabrication de deux rubans initiaux, puis le thermodurcissement préalable et partiel des parties des deux rubans initiaux destinées à se scinder ensemble pour former la partie centrale éventuellement rétrécie du multiruban, et enfin le thermodurcissement total de l'ensemble des deux rubans accolés de façon à former le multiruban final, suivi de l'entaillage sur une des deux faces du multiruban par un dispositif d'entaillage par intermittence comprenant un moyen d'entaillage de type mécanique (disque à tranchants et contre-disque associé) ou de type laser (émetteur de faisceau laser) de la partie centrale du multiruban, de façon à former des entailles discontinues, espacées avec un pas fixe (sous forme de pointillés), de préférence un pas constant.

Le problème qui se pose dans la demande de brevet japonais JP-A-1-138 516 est de réaliser un multiruban tel que les deux rubans initiaux qui le constituent sont parfaitement alignés. En effet un déplacement des deux rubans initiaux l'un par rapport à l'autre peut se produire lorsque la résine destinée à former la matrice du multiruban est encore fluide, c'est-à-dire non réticulée ou seulement partiellement réticulée, ou solide, c'est-à-dire pratiquement totalement réticulée. Un tel déplacement, même léger, est fort dommageable pour le multiruban ainsi constitué, et difficile à maîtriser en production industrielle. Ceci est encore plus vrai à haute vitesse de défilement des fibres optiques dans le dispositif de fabrication du multiruban. D'autre part le dispositif d'entaillage tel qu'il est réalisé dans ladite demande de brevet impose que les deux fibres optiques de la partie centrale du multiruban, où l'entaillage intermittent se produit, soient à une distance plus grande l'une de l'autre que la distance séparant deux fibres optiques voisines l'une de l'autre. Ainsi la distance séparant deux fibres optiques voisines constituant le multiruban doit être constante, à l'exception de la distance séparant les deux fibres optiques côte à côte dans la partie centrale du multiruban, qui doit être plus grande.

Le procédé selon l'invention se propose de résoudre les problèmes posés ci-dessus, en ce qu'il réalise la fabrication de multirubans comprenant des fibres optiques qui sont alignées côte à côte sensiblement dans un même plan, faciles à séparer en au moins deux rubans de fibres optiques sans dégradation des caractéristiques de transmission des fibres optiques.

La présente invention concerne un procédé de fabrication d'un multiruban de fibres optiques, à deux faces sensiblement plates, séparable en au moins deux rubans de fibres optiques, ledit procédé comprenant les deux étapes successives suivantes :
une première étape de réalisation, à partir d'une pluralité de fibres optiques comprenant chacune un coeur optique, une gaine optique et éventuellement au moins une couche de protection, d'un multiruban comportant lesdites fibres optiques disposées côte à côte, parallèles les unes aux autres sensiblement dans un même plan, qui définit alors les deux faces sensiblement plates dudit multiruban, et noyées à l'intérieur d'une matrice commune de protection, par enduction d'au moins une couche de revêtement en résine thermodurcissable, de préférence réticulable par ultraviolet, formant matrice sur la totalité des fibres réalisant le multiruban puis par thermodurcissement, de préférence par réticulation ultraviolet, de ladite couche,
et une seconde étape de réalisation d'au moins une ligne longitudinale de rupture préférentielle entre deux fibres optiques voisines, comprenant au moins une entaille, de préférence une entaille continue, dans la couche de revêtement, parallèlement à l'axe X des fibres optiques du multiruban et située dans un plan perpendiculaire aux faces du ruban et parallèle à l'axe X, sensiblement médian par rapport auxdites deux fibres optiques voisines, par un dispositif d'entaillage comprenant un moyen d'entaillage d'au moins une, de préférence des deux, face(s) du multiruban
le ruban étant destiné à être séparé ultérieurement pratiquement exclusivement par la ligne préférentielle de rupture ainsi réalisée par entaillage.

De préférence il est réalisé deux lignes longitudinales de rupture préférentielle en regard l'une de l'autre dans le plan P₀.

Le procédé selon l'invention a l'avantage de permettre une utilisation sur le terrain du multiruban de fibres optiques obtenu selon ledit procédé très fonctionnelle. En effet ledit multiruban peut être séparé en au moins deux rubans de fibres optiques de façon manuelle, sans utilisation d'un matériel supplémentaire de séparation, plus coûteux et plus compliqué. Un autre avantage est aussi de pouvoir réaliser cette séparation en quelque point du multiruban que ce soit, à ses extrémités ou en dehors desdites extrémités. Un avantage supplémentaire du multiruban de fibres optiques ainsi obtenu par le procédé de l'invention est que le procédé selon l'invention se suffit à lui-même dans l'objectif de la séparation ultérieure, c'est-à-dire que le ruban sera séparé ultérieurement pratiquement exclusivement par la ligne préférentielle de rupture ainsi réalisée par entaillage, à l'exclusion de tout autre moyen tel qu'un lien inséré dans la matrice.

Le procédé selon l'invention présente aussi l'avantage de permettre la fabrication de multirubans à espacement régulier, c'est-à-dire que toutes les fibres optiques voisines dans le multiruban sont à égale distance les unes des autres au sein du multiruban. Lesdits multirubans à espacement régulier présentent l'avantage d'être le plus souvent compatibles avec d'autres multirubans de fabrications différentes.

L'invention sera mieux comprise et d'autres caractéristiques et avantages apparaîtront à la lecture de la description qui va suivre, donnée à titre non limitatif, par référence aux figures 1 à 5 .

La figure 1 représente une vue schématique du procédé de fabrication d'un multiruban de fibres optiques séparable en deux rubans de fibres optiques selon l'invention.

La figure 2 représente une vue schématique en perspective écorchée à partir de la coupe transversale II - II (voir figure 1) d'un multiruban de fibres optiques obtenu selon le procédé selon l'invention, montrant le moyen d'entaillage entaillant le multiruban au sein du dispositif d'entaillage.

La figure 3 représente une vue schématique en coupe transversale lll - lll (voir figure 1) d'un multiruban de fibres optiques obtenu selon le procédé selon l'invention.

La figure 4 présente une vue schématique en coupe transversale IV - IV (voir figure 1) du dispositif d'entaillage.

La figure 5 représente une vue schématique en coupe transversale V - V (voir figure 4) du dispositif d'entaillage.

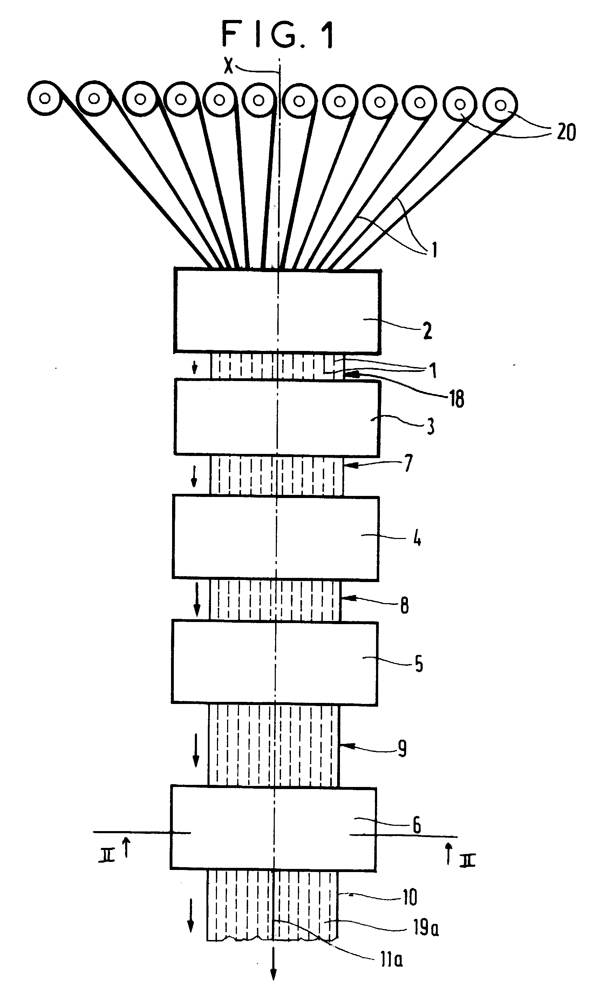

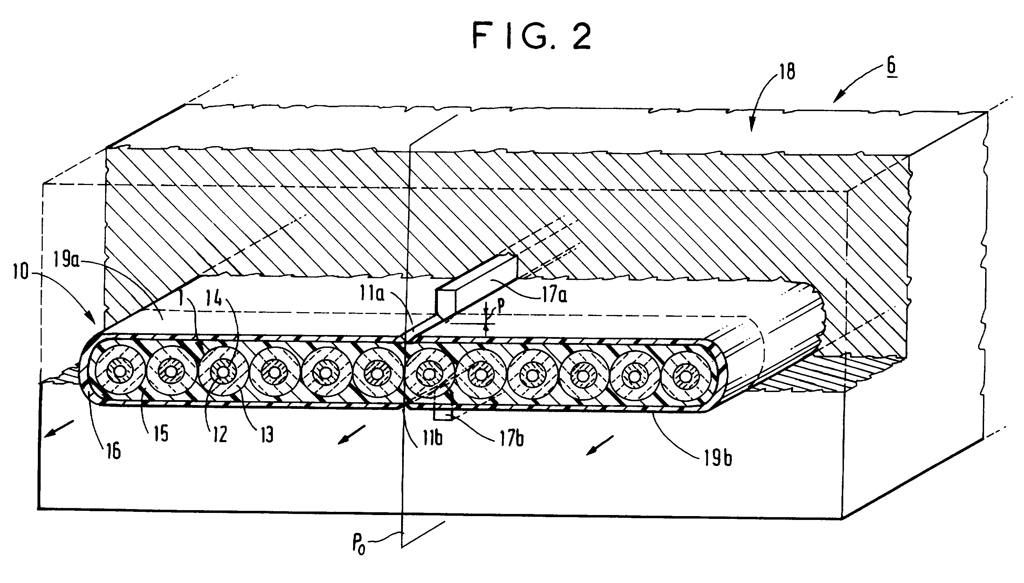

La figure 1 représente une vue schématique du procédé de fabrication selon l'invention d'un multiruban 10 à deux faces sensiblement plates 19a et 19b de douze fibres optiques 1, comprenant deux entailles continues 11a et 11b sur chacune de ses deux faces 19a et 19b (seules la face 19a et l'entaille 11a sont visibles sur la figure 1), séparable en deux rubans de fibres optiques de six fibres optiques chacun. Chaque fibre optique 1 est issue d'une débobineuse de fibre optique 20, et les douze fibres optiques sont réunies dans le dispositif 2 d'enduction d'une couche de revêtement 15 (voir figure 2) en résine thermodurcissable par réticulation U.V. Le multiruban 18 ainsi obtenu est constitué de fibres optiques 1 disposées côte à côte, parallèles les unes aux autres et sensiblement dans un même plan, qui définit alors les deux faces 19a et 19b sensiblement plates dudit multiruban, et noyées à l'intérieur de la couche de revêtement 15. A ce stade de la fabrication la résine est encore relativement fluide. Le dispositif 2 permet aussi l'alignement des fibres avant leur enduction.

Le sens de défilement des fibres optiques dans le dispositif représenté à la figure 1 est indiqué par les flèches ainsi que par un axe X. L'axe X, qui est l'axe des fibres optiques dans le multiruban, autrement dit qui est parallèle à l'axe longitudinal de chaque fibre optique du multiruban, est en général un axe vertical descendant.

Le multiruban 18 est ensuite dirigé vers un dispositif 3 de thermodurcissement par réticulation, qui comporte une source U.V., de façon à obtenir un multiruban 7 au moins partiellement durci aux U.V. Selon une variante, le dispositif 3 comprend au moins deux sources U.V.

Le multiruban 7 ainsi obtenu est dirigé vers un dispositif 4 d'enduction d'une couche de revêtement 16 (voir figure 2) en résine thermodurcissable par réticulation U.V., de façon à obtenir un multiruban 8.

Le multiruban 8 ainsi obtenu est dirigé vers un dispositif 5 de thermodurcissement par réticulation, qui comporte une source U.V., de façon à obtenir un multiruban 9 quasiment totalement durci aux U.V. Selon une variante, le dispositif 5 comprend au moins deux sources U.V.

Ainsi après chaque enduction d'une couche de revêtement on procède à un thermodurcissement au moins partiel de la résine constituant ladite couche avant de procéder à l'enduction d'une nouvelle couche de revêtement. On a donc utilisé la méthode dite "wet-on-dry".

Les sources de réticulations U.V. utilisé dans le procédé selon l'invention sont des sources connues de l'homme du métier, telles que des sources de lumière ultraviolet, telles que des lampes à vapeur de mercure à haute pression, des tubes fluorescents spéciaux ou des lampes aux halogénures de métaux spéciales, ou bien des lampes à excimères à longueur d'onde unique.

Le multiruban 9 est alors dirigé vers un dispositif 6 d'entaillage, de façon à obtenir un multiruban entaillé 10 comportant deux entailles 11a et 11b peu profondes, longitudinales et continues, c'est-à-dire étendues sur toute la longueur du multiruban 10, respectivement sur chacune des deux faces 19a et 19b du multiruban 10 (voir figure 2).

Selon une variante il est possible que les fibres optiques ne soient pas régulièrement espacées et comportent un espacement entre deux fibres optiques voisines plus grand au niveau des emplacements où le dispositif d'entaillage 6 réalise au moins une ligne de rupture préférentielle. Dans un tel cas, la distance séparant deux fibres optiques est constante, par exemple sensiblement égale à zéro, à l'exception de la distance séparant lesdites fibres optiques voisines. Selon une autre variante, il est aussi possible que le dispositif d'entaillage forme le long de la ou des lignes de rupture préférentielle des entailles discontinues, c'est-à-dire espacées, de préférence régulièrement espacées les unes des autres par intermittence, avec un pas d'entaillage donné de préférence constant.

Ainsi le dispositif d'entaillage 6 réalise deux lignes de rupture préférentielle en regard l'une de l'autre, comme il sera expliqué plus loin. C'est une réalisation avantageuse qui permet une séparation du multiruban de fibres optiques, obtenu selon le procédé de l'invention, en deux rubans de fibre optique, plus facile lors de l'utilisation sur le terrain, en particulier dans le cas d'entailles discontinues mais aussi dans le cas d' une entaille continue.

Selon un mode de réalisation du dispositif selon l'invention différent de celui décrit d'après la figure 1 qui illustre une méthode dite "wet-on-dry", on utilise dans le cas de l'enduction d'au moins deux couches de revêtement et leur thermodurcissement préalablement à l'entaillage, pour l'enduction et le thermodurcissement des couches de résine formant matrice du multiruban la méthode dite "wet-on-wet", qui consiste à réaliser l'enduction des couches de revêtement puis de procéder au thermodurcissement de l'ensemble desdites couches. Ainsi on ne procède pas à un thermodurcissement au moins partiel entre chaque enduction de couche de revêtement.

Selon un autre mode de réalisation, on ne procède qu'à l'enduction d'une seule couche de revêtement, puis à son thermodurcissement, avant de procéder à l'entaillage.

La figure 2 représente une vue schématique en perspective écorchée à partir de la coupe transversale ll - II (voir figure 1) d'un multiruban entaillé 10 de douze fibres optiques 1 obtenu selon le procédé de l'invention tel que représenté à la figure 1. La fibre optique 1 comporte un coeur optique 14, une gaine optique 12 et une couche de protection 13. Le multiruban 9 comprend une double couche de protection (15, 16) formant matrice. Ledit multiruban est entaillé par le dispositif d'entaillage 6 de façon à présenter les entailles continues 11a et 11b. On voit des lames coupantes 17a et 17b entaillant le multiruban 9 sur ses deux faces respectives 19a et 19b, réalisant le multiruban 10 présentant les entailles continues respectives 11a et 11b, au sein d'appareillages situés au sein de la boîte 18, comportant entre autres les moyens de maintien des lames 17a et 17b, ainsi que d'autres appareillages utiles au fonctionnement du dispositif d'entaillage 6. Les deux entailles 11a et 11b sont réalisées dans le plan P₀ défini comme un plan perpendiculaire aux faces du multiruban et parallèle à l'axe X, sensiblement médian par rapport aux deux fibres optiques situées au centre du multiruban. Le plan P₀ défini ainsi comprend les entailles 11a et 11b. Par suite les entailles 11a et 11b sont en regard l'une de l'autre dans le plan P₀.

Les deux lames coupantes 17a et 17b sont d'épaisseur d'entaille p du multiruban 9 constante sur toute leur longueur, c'est-à-dire que le moyen d'entaillage provoque sur au moins une face, deux faces 19a et 19b dans le cas représenté sur la figure 2, du multiruban une entaille (11a, 11b) continue de profondeur constante. Selon la figure 2, le moyen d'entaillage (17a, 17b) réalise par les entailles 11a et 11b deux lignes longitudinales de rupture préférentielle en regard l'une de l'autre par rapport au multiruban 10, ce qui favorise la séparation du multiruban 10 en deux rubans sur le terrain. Une autre variante de l'invention consiste à disposer de lames coupantes graduelles, c'est-à-dire que la profondeur de coupe de la lame coupante augmente, pour avoir en fin de course la profondeur p requise, entaillant de plus en plus de matière dans le multiruban 9 au fur et à mesure de son déplacement (dans le sens de défilement selon l'axe X) à l'intérieur du dispositif d'entaillage 6. On obtient ainsi dans le cas de la présence de deux lames coupantes un multiruban entaillé comprenant deux entailles de profondeur constante p. Cette variante présente l'avantage à haute vitesse de défilement des fibres optiques dans le dispositif de fabrication du multiruban de diminuer les frottements du multiruban sur les lames 17a et 17b.

Dans un exemple de réalisation, le multiruban 10 est obtenu par entaillage au moyen d'un laser à excimères industriel, et la profondeur de l'entaille est de 15 µm pour un ruban de dimensions sensiblement égales à 3,05 mm × 345 µm, avec le diamètre de chacune des fibres optiques égal à 245 µm. Généralement selon l'invention, une profondeur d'au moins 10 µm, de préférence comprise entre 15 et 50 µm, est souhaitable. Plus généralement il est souhaité et préféré selon l'invention que, dans chaque plan perpendiculaire à l'axe X, le rapport entre la profondeur de l'entaille et l'épaisseur totale du ruban est inférieur ou égale à 10%, de façon encore plus préférée inférieur ou égal à 5%. Dans l'exemple précédent un tel rapport est égal à 4,35%.

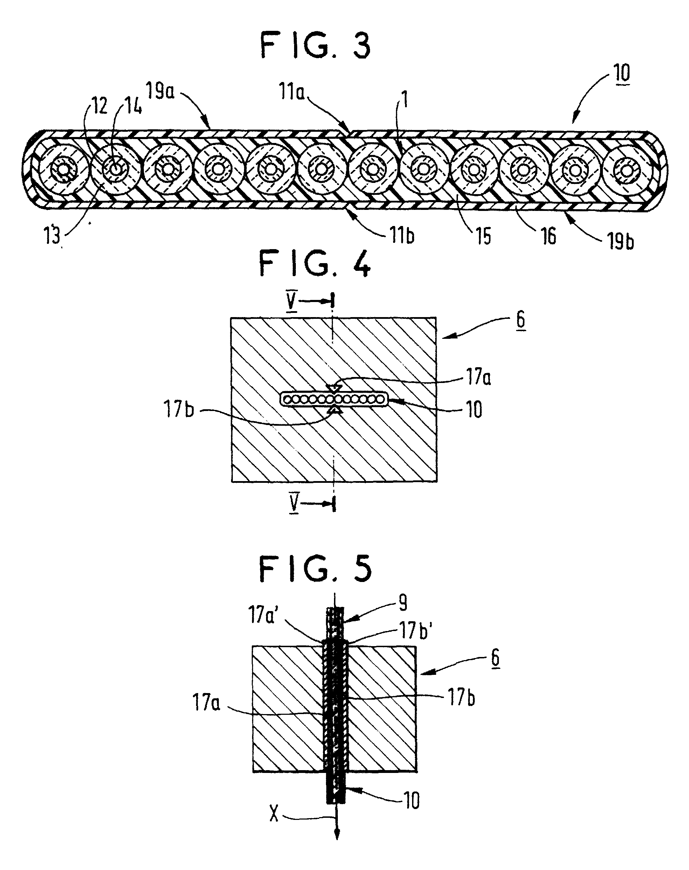

La figure 3 représente une vue schématique en coupe transversale III - lll (voir figure 1) du multiruban 10. La fibre optique 1 comporte un coeur optique 14, une gaine optique 12 et une couche de protection 13. Les dimensions relatives coeur/gaine de ladite fibre optique peuvent prendre toute proportion connue de l'homme du métier. Le multiruban 10 comprend douze fibres optiques 1 à égale distance les unes des autres au sein du multiruban 10, ainsi qu'une double couche de protection (15, 16) formant matrice dudit multiruban. Ledit multiruban a été entaillé par le dispositif d'entaillage 6 de façon à présenter les entailles continues 11a et 11b.

La figure 4 représente une vue schématique en coupe transversale IV - IV (voir figure 1) du dispositif d'entaillage 6 tel que représenté à la figure 1. Un tel dispositif 6 est de type mécanique, mais il est aussi possible dans le cadre de la présente invention d'utiliser un dispositif d'entaillage de type faisceau de laser. Un tel dispositif d'entaillage de type laser est généralement un laser coupant industriel tel qu'un laser à excimères. On voit les deux lames coupantes 17a et 17b, formant le moyen d'entaillage entaillant le multiruban 10 sur ses deux faces respectives 19a et 19b par les deux entailles continues respectives 11a et 11b, au sein d'appareillages (non représentés) situés au sein de la boîte 18.

Il est préféré selon une variante du procédé selon l'invention d'associer au dispositif d'entaillage un dispositif d'alignement (non représenté) du multiruban par rapport au moyen d'entaillage, de façon à positionner l'entaillage le plus précisément possible. De même il est possible et préféré selon une autre variante du procédé selon l'invention d'associer au dispositif d'entaillage un dispositif de nettoyage (non représenté) du moyen d'entaillage formé des lames coupantes 17a et 17b, de façon à assurer principalement une relative propreté des lames coupantes 17a et 17b nécessaire pour l'efficacité du dispositif, particulièrement à haute vitesse de défilement. Un tel dispositif peut aussi avantageusement permettre de réaliser un multiruban entaillé sensiblement exempt d'impuretés résiduelles telles que des impuretés sous la forme de petites particules de résine thermodurcie. Par exemple un tel dispositif de nettoyage peut être un dispositif injectant un flux d'air, dans le sens de l'axe X ou dans le sens opposé, soit dans le sens descendant ou dans le sens ascendant, le long du ruban en cours d'entaillage. Il est encore possible d'utiliser une brosse ou tout autre moyen mécanique. Ou bien un tel dispositif de nettoyage peut être par exemple un dispositif à ultrasons injectant un flux de liquide de nettoyage le long du ruban en cours d'entaillage tout en générant des ultrasons qui aident à faire passer les impuretés dans le flux de liquide. Dans un tel cas le flux de liquide circule de préférence en boucle fermée et sur ladite boucle de circulation se trouve un dispositif de nettoyage dudit liquide.

La figure 5 représente une vue schématique en coupe transversale selon V - V (voir figure 4) du dispositif d'entaillage 6. On y voit les lames coupantes 17a et 17b comportant deux protubérances 17a' et 17b', c'est-à-dire que le dispositif d'entaillage 6 comprend un dispositif, constitué ici des deux protubérances 17a' et 17b', d'introduction du multiruban 9 en son sein, permettant une meilleure prise du multiruban lors de son introduction dans le dispositif d'entaillage 6, en particulier à haute vitesse de défilement des fibres optiques dans le dispositif de fabrication du multiruban 10.

Bien entendu le procédé selon l'invention ne se limite pas aux représentations décrites ci-dessus. En particulier, le multiruban obtenu par le procédé selon l'invention peut aussi être un multiruban respectivement de huit ou de vingt-quatre fibres optiques, séparable respectivement en deux rubans de quatre fibres optiques, ou bien en quatre rubans de six fibres optiques ou en deux rubans de douze fibres optiques.

## Revendications

1. Procédé de fabrication d'un multiruban (10) de fibres optiques (1), à deux faces sensiblement plates (19a, 19b), séparable en au moins deux rubans de fibres optiques, ledit procédé comprenant les deux étapes successives suivantes :
une première étape de réalisation, à partir d'une pluralité de fibres optiques (1) comprenant chacune un coeur optique (14), une gaine optique (12) et éventuellement au moins une couche de protection (13), d'un multiruban (10) comportant lesdites fibres optiques (1) disposées côte à côte, parallèles les unes aux autres sensiblement dans un même plan, qui définit alors les deux faces sensiblement plates (19a, 19b) dudit multiruban, et noyées à l'intérieur d'une matrice commune de protection (15, 16), par enduction d'au moins une couche de revêtement en résine thermodurcissable formant matrice sur la totalité des fibres réalisant le multiruban puis par thermodurcissement de ladite couche,
et une seconde étape de réalisation d'au moins une ligne longitudinale de rupture préférentielle entre deux fibres optiques voisines, comprenant au moins une entaille (11a, 11b) dans la couche de revêtement (15, 16), parallèlement à l'axe X des fibres optiques du multiruban et située dans un plan (P₀) perpendiculaire aux faces du ruban et parallèle à l'axe X, sensiblement médian par rapport auxdites deux fibres optiques voisines, par un dispositif d'entaillage comprenant un moyen d'entaillage (17a, 17b) d'au moins une des faces (19a, 19b) du multiruban
le ruban étant destiné à être séparé ultérieurement pratiquement exclusivement par la ligne préférentielle de rupture ainsi réalisée par entaillage.

2. Procédé selon la revendication 1 tel que le thermodurcissement est réalisé par réticulation sous l'effet d'un rayonnement ultraviolet.

3. Procédé selon l'une des revendications 1 ou 2 tel que le moyen d'entaillage (17a, 17b) entaille les deux faces (19a, 19b) du multiruban, en regard l'une de l'autre dans le plan (P₀).

4. Procédé selon l'une des revendications 1 à 3 tel que les fibres optiques (1) voisines dans le multiruban sont à égale distance les unes des autres au sein du multiruban (10).

5. Procédé selon l'une des revendications 1 à 4 tel que le dispositif d'entaillage forme sur au moins une face du multiruban une entaille continue (11a, 11b) le long de la ligne préférentielle de rupture.

6. Procédé selon l'une des revendications 1 à 5 tel que, dans chaque plan perpendiculaire à l'axe X, le rapport entre la profondeur de l'entaille et l'épaisseur totale du ruban est inférieur ou égale à 10%.

7. Procédé selon l'une des revendications 1 à 6 tel que, dans chaque plan perpendiculaire à l'axe X, le rapport entre la profondeur de l'entaille et l'épaisseur totale du ruban est inférieur ou égale à 5%.

8. Procédé selon l'une des revendications 1 à 7 tel que le dispositif d'entaillage est associé à un dispositif d'alignement du multiruban par rapport au moyen d'entaillage.

9. Procédé selon l'une des revendications 1 à 8 tel que le moyen d'entaillage est de type faisceau de laser.

10. Procédé selon l'une des revendications 1 à 8 tel que le moyen d'entaillage (17a, 17b) est de type mécanique.

11. Procédé selon la revendication 10 comprenant en association au dispositif d'entaillage un dispositif de nettoyage du moyen d'entaillage.

12. Procédé selon l'une des revendications 10 ou 11 tel que le dispositif d'entaillage (6) comprend un dispositif (17a', 17b') d'introduction du multiruban (9) en son sein.
